# EUROPEAN PATENT SPECIFICATION

(11) **EP 1 978 759 B1**
(45) Date of publication and mention of the grant of the patent: **10.01.2018**
(21) Application number: 07710851.2
(22) Date of filing: 26.01.2007
(51) Int. Cl.: H04W 60/04

(54) **A METHOD FOR TRIGGERING TRACKING AREA UPDATE IN PACKET SWITCHED WIRELESS SYSTEM**
VERFAHREN ZUR AUSLÖSUNG VON VERFOLGUNGSBEREICHAKTUALISIERUNGEN IN EINEM DRAHTLOSEN PAKETVERMITTELTEN SYSTEM
MÉTHODE PERMETTANT DE DÉCLENCHER UNE MISE À JOUR DE ZONE DE SUIVI DANS UN SYSTÈME DE COMMUTATION PAR PAQUETS SANS FIL

(30) Priority: 26.01.2006 CN 200610011286
(43) Date of publication of application: 08.10.2008
(73) Proprietor: ZTE Corporation, Shenzhen, Guangdong 518057 (CN)
(72) Inventor: GAN, Lu, Guangdong 518057 (CN); ZHU, Jinguo, Guangdong 518057 (CN); WU, Se, Guangdong 518057 (CN); ZHU, Wenruo, Guangdong 518057 (CN)
(74) Representative: Novagraaf Technologies
(86) International application number: PCT/CN2007/000301
(87) International publication number: WO 2007/087751

(56) References cited:
- CN-A- 1 243 628
- CN-A- 1 285 703
- US-B1- 6 275 706
- US-B1- 6 510 318

## Description

### Field of the Invention

The present invention relates to telecommunication field, especially to a method for triggering tracking area update in packet switched wireless system.

### Background of the invention

With the appearance of the World Interoperability for Microwave Access (short for Wimax), in order to keep powerful competitive power in the mobile communication field, the 3^{rd} generation mobile communication system must improve network performance and reduce the cost of the network construction and operation. Therefore, the 3^{rd} Generation Partnership Project (short for 3GPP) standardization work group are devoting in researching the evolution of Packet Switched Core (short for PS Core) and Universal Terrestrial Radio Access Network (short for UTRAN), the title of the research is "System Architecture Evolution (short for SAE)", the goal of which is enable the evolved PS Core (short for E-PS Core) to be possible to provide higher communication rate, shorter communication delay, and optimized packet switched and support the mobility management between the Evolved UTRAN (short for E-UTRAN), UTRAN, Wireless Local Area Network (short for WLAN) and the other non 3GPP access network.

A signaling interactive structure and solution is proposed 3GPP TR 23.882 draft V0.9.0 (2005-12) for the mobility management of the User Equipment (short for UE) in idle condition between E-UTRAN and UTRAN/GERAN. That is, a concept "Equivalent Tracking Areas" is proposed.

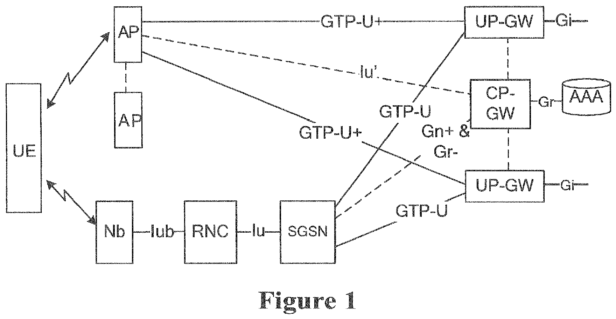

Figure 1 shows a block diagram of the system structure of an E-UTRAN and a UTRAN which equate tracking areas mutually. As shown in Figure 1, in the structure, Serving GPRS Support Node (short for SGSN) is SGSN supporting the 3^{rd} generation mobile communication system, Radio Network Controller (short for RNC) is radio network controller in the 3^{rd} generation mobile communication system, SGSN is connected to User Plane-Gateway (short for UP-GW) of SAE via GPRS Tunnel Protocol-User Plane (short for GTP-U), SGSN is connected to Control Plane-Gateway (short for CP-GW) of SAE via GPRS Tunnel Protocol-Control Plane (short for GTP-C). GP-GW is a control plane function entity. Access Point (short for AP) is a base station in E-UTRAN, for the UE having E-UTRA abilities, SGSN does not directly send Mobile Application Part (short for MAP) signaling to Home Location Register/ Home Subscriber Server (short for HLR/HSS) but send it to HSS or Authentication, Authorization and Accounting Server (short for AAA server) via GP-GW. The structure also can correspond to the structure that the UE moves between E-UTRAN and GERAN (GSM/EDGE Radio Access Network), at this time, SGSN in the structure represents 2G SGSN, RNC corresponds to Base Station Controller (short for BSC).

Regarding the equivalent tracking area carry on the following explanation:
AP covered by E-UTRA and the area covered by UTRA/GERA are located in independent tracking area or location area;

According to the attachment or tracking area update, the UE can be accepted by multiple equivalent tracking areas, a typical example is a tracking area of E-UTRA and a tracking area of UTRA/GERA, UE can be in different tracking areas and meanwhile they are assigned with different Packet Temperate Mobile Subscription Identities (short for P-TMSI);

When UE is in LTE-IDLE State (the user plane connection between the network element of a core network and E-UTRAN has not been established, wherein LTE is the abbreviation of Long Term Evolution) and Inactive UTRA State and is moved to a new cell, so long as the new cell belongs to a set of the equivalent tracking areas, signaling interaction is not occurred between the UE and the network. Wherein, inactive UTRA state refers to RRC (Radio Resource Control)-IDLE state and URTAN Registration Area-Paging Channel State (short for URA-PCH state).

If the UE at URA-PCH state moving from UTRA to E-UTRA will not cause the release of the Iu Interface-Packet Switched (short for Iu-PS) connected between PS field and RNC, and the new cell is not in the list of the equivalent tracking areas, the UE performs process of normal Tacking Area Update.

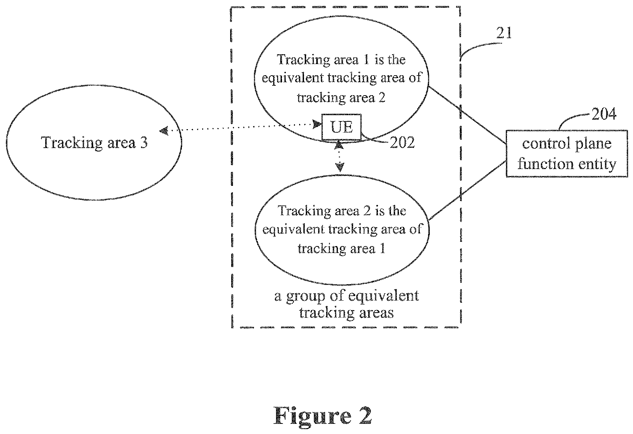

Figure 2 shows a view of the equivalent tracking areas. As shown in Figure 2, a tracking area 1 and a tracking area 2 equate tracking areas mutually, a tracking area 3 and the tracking area 1 do not equate mutually, and the tracking area 3 and the tracking area 2 also do not equate tracking areas mutually, the scope of the group of the equivalent tracking areas 21 includes the tracking area 1 and the tracking area 2, but does not include the tracking area 3. When the UE 202 in idle state and inactive state moves between the tracking area 1 and the tracking area 2, the UE 202 does not initiate tracking area update; but when the UE 202 moves between the tracking area 1 and the tracking area 3 or moves between the tracking area 2 and the tracking area 3, the UE 202 initiates tracking area update. The same control plane function entity 204 controls all tracking areas in the scope of a group of the tracking areas.

In the legacy network, when UE discovers the current tracking identifier sent down by the network and the original tracking area identity (TAI) stored itself inconsistent, the terminal initiates the process of tracking area update. But in the equivalent tracking area, such condition is insufficient to trigger the process of tracking area update. The UE must judge whether already leave the original equivalent tracking area, if so, the tracking area update process can be initiated. But, there is no such method for the UE to make such judgment.

US 6,510,318 B1 discloses a location registration control method implemented in a mobile communication system.

### Summary of the invention

In view of one or more problems above mentioned, the present invention proposes a method for triggering tracking area update in the packet switched wireless system that includes equivalent tracking areas. The method for triggering tracking area update in packet switched wireless system comprises the following steps: S302, configuring, managing and/or updating one or more tracking area identifier pool(s) in control plane function entity, wherein each tracking area identifier pool corresponds to a group of equivalent tracking areas, the tracking area identifier pool includes all the tracking area identifiers of the corresponding equivalent tracking areas; S304, when the UE registers in the network successfully, the control plane function entity sends the tracking area identifier pool(s) to the user equipment; S306, during the moving of the UE, UE judges whether the current tracking area identifier which is broadcasted by the packet switched wireless system is not identical with any one of all the tracking area identifiers in the tracking area identifier pool stored in the user equipment; if so, triggering the process of tracking area update.

Wherein, in step S304, the control plane function entity sends the tracking area identifier pool(s) to the user equipment through the registration confirmation message (also calls "attach accept message") sent to the user equipment.

When the user equipment is in long term evaluation access system, the step S304 of the control plane function entity sending the tracking area identifier pool(s) to the user equipment further includes: the control plane function entity initiates a registration request; the control plane function entity sends the registration request to the Home Subscriber Server which the control plane function entity belongs to; the Home Subscriber Server sends the registration confirmation message to the control plane function entity; the control plane function entity places the tracking area identifier pool(s) in the registration confirmation message and sends it to the user equipment.

Alternatively, when the user equipment is in the long term evolution access system, step S304 of the control plane function entity sending the tracking area identifier pool(s) to the user equipment further includes: SAE control plane triggers a registration request; SAE control plane sends the registration request to the control plane function entity; the control plane function entity sends a registration request to the Home Subscriber Server HSS which it belongs to; the Home Subscriber Server HSS sends a registration confirmation message to the control plane function entity; the control plane function entity places the tracking area identifier pool(s) in the registration confirmation message and sends it to the SAE control plane; the SAE control plane forwards the registration confirmation message including the tracking area identifier pool(s) to the user equipment.

When the user equipment is in 2G/3G access system, step S304 of the control plane function entity sending the tracking area identifier pool(s) to the user equipment further includes: 2G/3G Serving General Packet Radio Service support node triggers a registration request; 2G/3G serving General Packet Radio Service support node sends the registration request to the control plane function entity; the control plane function entity forwards the registration request to the Home subscriber server which it belongs to; the Home subscriber server sends a registration confirmation message to the control plane function entity; the control plane function entity places the tracking area identifier pool(s) in the registration confirmation message and sends it to 2G/3G serving General Packet Radio Service support node; 2G/3G serving General Packet Radio Service support node forwards the registration confirmation message including the tracking area identifier pool(s) to the user equipment.

Wherein the method for triggering tracking area update in packet switched wireless system according to the invention may further includes the following step: the control plane function entity stores the tracking area identifiers in groups. Wherein, the user equipment can identify tracking area identifier pool(s) and stores the tracking area identifier pools therein.

Wherein step S306 further includes the following step: the user equipment compares the tracking area identifier which is broadcasted by the packet switched wireless system with each tracking area identifier stored in the tracking area identifier pool(s) in some order.

By the present invention, tracking area update is triggered in the packet switched wireless system which includes equivalent tracking areas. Furthermore, the modification to the data structure in the user equipment made by the method of the present invention is the smallest, and the requirement to the processing abilities of the user equipment is also the lowest.

### Brief description of the drawings

The drawings shown herein is provided for the further understanding of the present invention, and constitute a part of the invention, the exemplary embodiments of the present invention and its description are used for explaining the present invention, but not constitute the improper limitation to the present invention. Wherein:
Figure 1 is a view of the structure of one 2G/3G (2^{nd}/3^{rd} generation wireless network) access system and one SAE/LTE (system architecture evolution/long term evolution) access system equating tracking area mutually;
Figure 2 is a view of an equivalent tracking area;
Figure 3 is the flow chart of the method for triggering tracking area update in packet switched wireless network according to an embodiment of the present invention;
Figure 4 is a view of the structure of the tracking area identifier pool(s) according to the embodiment of the present invention;
Figure 5 is a flow chart of the process that the control plane function entity configures the tracking area identifier pool(s) to the LTE access system UE according to the embodiment of the present invention;
Figure 6 is a flow chart of the process that the control plane function entity configures the tracking area identifier pool(s) to the LTE access system UE according to another embodiment of the present invention;
Figure 7 is a flow chart of the process that the control plane function entity configures the tracking area identifier pool(s) to 2G/3G access system UE according to yet another embodiment of the present invention;
Figure 8 is a flow chart of the process that the UE judges whether triggers tracking area update or not.

### Detailed description of the preferred embodiments

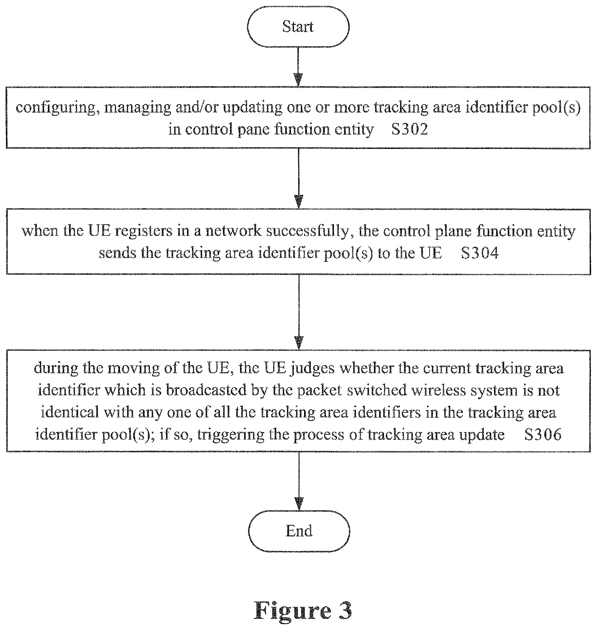

Figure 3 shows a method for triggering tracking area update in packet switched wireless network according to an embodiment of the present invention. As shown in Figure 3, the method for triggering tracking area update in packet switched wireless network according to an embodiment of the present invention includes: S302, configuring, managing and/or updating one or more tracking area identifier pool(s) in control plane function entity, wherein each tracking area identifier pool corresponds to a group of equivalent tracking areas, the tracking area identifier pool includes all the tracking area identifiers of the corresponding equivalent tracking areas; S304, when UE registers in the network successfully, the control plane function entity sends the tracking area identifier pool(s) to the user equipment; S306, during the moving of the UE, UE judges whether the current tracking area identifier which is broadcasted by packet switched wireless system is not identical with any one of all the tracking area identifiers in the tracking area identifier pool stored in the user equipment; if so, triggering the process of tracking area update. Wherein, step S306 further includes: the user equipment compares the tracking area identifier which is broadcasted by the packet switched wireless system with each tracking area identifier stored in the tracking area identifier pool(s).

Wherein, in step S304, the control plane function entity sends the tracking area identifier pool(s) to the user equipment through the registration confirmation message sent to the user equipment.

The method for triggering tracking area update in packet switched wireless system according to the invention may further include the following step: the control plane function entity stores the tracking area identifiers in groups. Wherein, the user equipment can identify the tracking area identifier pool(s) and stores the tracking area identifier pools therein.

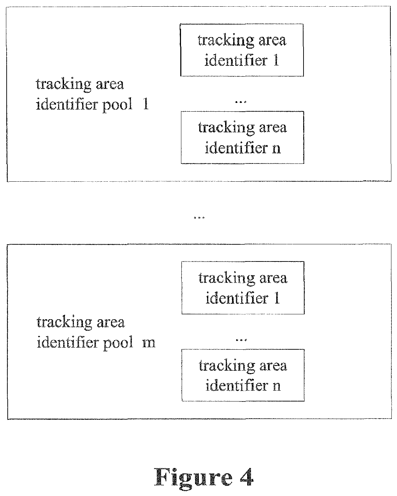

Figure 4 is a view of the structure of the tracking area identifier pools according to the embodiment of the present invention. Figure 4 shows m tracking area identifier pools 1 to m. One tracking area identifier pool corresponds to a group of equivalent tracking areas, i.e., including all identifiers of the tracking areas (n) in the group of the equivalent tracking areas. Since a group of the equivalent tracking areas is comprised of at least two different tracking areas, n is bigger than or equal to 2. Since one or more groups of equivalent tracking areas is configured in the control plane function entity, m is bigger than or equal to 1. The control plane function entity in a packet switched wireless system manages the corresponding relationship between the tracking area identifier pools and the tracking area identifiers, the actual storage format is the original format of the tracking areas, only the control plane function entity should store these tracking area identifiers in groups. This can ensure the modification to the original data format is the smallest.

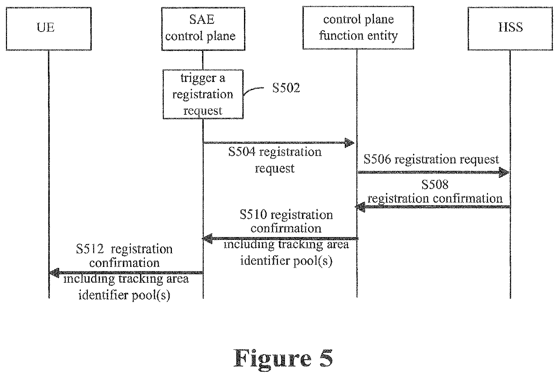

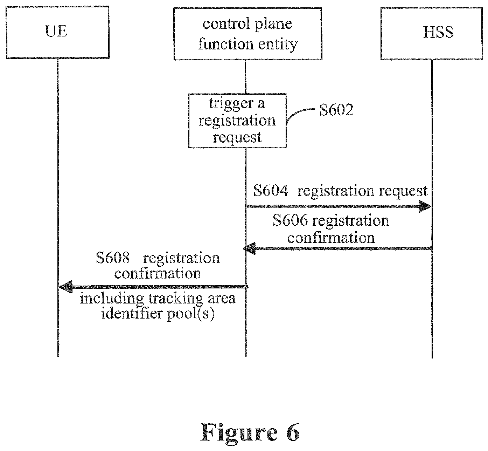

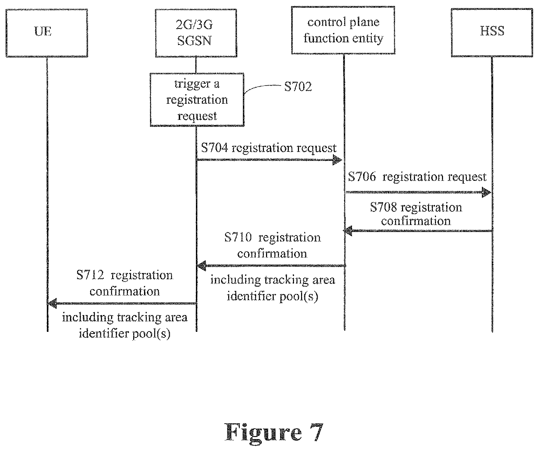

Figures 5, 6 and 7 show the flow charts of the processes of configuring the tracking area identifier pool(s) to UE under different network structure respectively according to an embodiment of the present invention. The tracking area update request or attach request can lead to registration procedure. After UE sends a tracking area update request or an attachment request to the network, 2G/3G SGSN, the control plane function entity or the control plane of SAE initiates a registration request to HSS. After registering successfully, HSS returns a registration confirmation message. The control plane function entity places the information of the tracking area identifier pool(s) in the registration confirmation message and sends the information including the tracking area identifier pool(s) to the UE through 2G/3G SGSN, the control plane function entity or the control plane of SAE. Since the structure and the flow of the current SAE have not been determined, there are two possible ways in SAE network, i.e., the control plane function entity or the control plane of SAE initiates a registration request to HSS. Wherein, Figures 5 and 6 are used for explaining the situation that the UE is in SAE/LTE (system architecture evolution/long evolution) access system. Figure 5 shows that the registration request is initiated by the control plane of SAE and then forwarded by the control plane function entity that manages the equivalent tracking areas. Figure 6 shows that when the control plane of SAE and the control plane function entity that manages the equivalent tracking areas are the same entity, the registration flow is initiated by the control plane function entity that manages the equivalent tracking areas. Figure 7 shows the situation that UE is in 2G/3G (2^{nd}/3^{rd} wireless network) access system, at this time, the registration request is initiated by 2G/3G SGSN and then forwarded by the control plane function entity that manages the equivalent tracking areas.

Figure 5 is a flow chart of the process that the control plane function entity configures the tracking area identifier pool(s) to the SAE/LTE access system UE according to the embodiment of the present invention. As shown in Figure 5, when UE is in SAE/LTE access system, the registration request is initiated by the control plane of SAE and then forwarded by the control plane function entity that manages the equivalent tracking areas, includes the following steps:
S502, the control plane of SAE triggers a registration request. When UE is in SAE/LTE access system, the registration request can be initiated by the control plane of SAE and then forwarded by the control plane function entity that manages the equivalent tracking areas.
S504, the control plane of SAE sends the registration request to the control plane function entity.
S506, the control plane function entity forwards the registration request to HSS.
S508, HSS sends a registration confirmation message to the control plane function entity.
S510, the control plane function entity places the information of the tracking area identifier pool(s) in the registration confirmation message and sends it to the control plane of SAE.
S512, the control plane of SAE forwards the registration confirmation message including the information of the tracking area identifier pool(s) to the UE. In the embodiment of the present invention, the UE needs to be able to identify the tracking area identifier pools. Maybe only one tracking area identifier pool is needed to be stored in one UE.

Figure 6 is a view of the process that the control plane function entity configures the tracking area identifier pool(s) to the SAE/LTE access system UE according to another embodiment of the present invention. When the control plane of SAE and the control plane function entity that manages the equivalent tracking areas are the same entity, a registration request can be initiated by the control plane function entity that manages the equivalent tracking areas. The process includes the following steps:
S602, the control plane function entity that manages the equivalent tracking areas initiates a registration request.
S604, the control plane function entity sends the registration request to HSS.
S606, HSS sends a registration confirmation message to the control plane function entity.
S608, the control plane function entity places the information of the tracking area identifier pools in the registration confirmation message and sends it to UE. In the embodiment of the present invention, the UE needs to be able to identify the tracking area identifier pools. Maybe only one tracking area identifier pool is needed to be stored in one UE.

Figure 7 is a view of the process that the control plane function entity configures the tracking area identifier pool(s) to the 2G/3G access system UE according to yet another embodiment of the present invention. When the UE is in 2G/3G access system, a registration request is initiated by 2G/3G SGSN and then forwarded by the control plane function entity that manages the equivalent tracking areas. The process includes the following steps:
S702, 2G/3G SGSN triggers a registration request. When the UE is in 2G/3G access system, the registration request can be initiated by 2G/3G SGSN and then forwarded by the control plane function entity that manages the equivalent tracking areas.
S704, 2G/3G SGSN sends the registration request to the control plane function entity.
S706, the control plane function entity forwards the registration request to HSS.
S708, HSS sends a registration confirmation message to the control plane function entity.
S710, the control plane function entity places the information of the tracking area identifier pool(s) in the registration confirmation message and sends it to 2G/3G SGSN.
S712, 2G/3G SGSN forwards the registration confirmation message including the information of the tracking area identifier pool(s) to the UE. In the embodiment, the UE needs to be able to identify the tracking area identifier pools. Maybe only one tracking area identifier pool is needed to be stored in one UE.

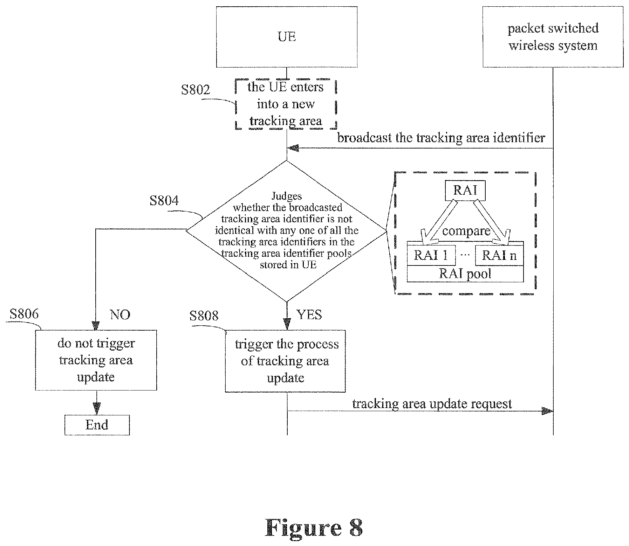

Figure 8 is a flow chart of the process that the UE in idle state and UE in inactive state judge whether triggers tracking area update or not. As shown in Figure 8, the process of judging whether triggers tracking area update or not mainly includes the following steps:
S802, the UE in user idle state and UE in inactive state enter into a new tracking area;
S804, the UE receives the current tracking area identifier which is broadcasted by packet switched wireless system, and compares the broadcasted tracking area identifier with any one of the tracking area identifiers (also called Routing Area Identifier, RAI) in the tracking area identifier pools stored in the UE, and judges whether the broadcasted tracking area identifier is identical with any one of all the tracking area identifiers in the tracking area identifier pools stored in UE or not; if not, turn to step S808; if so identical to any, turn to S806. Wherein, since the length of the tracking area identifier is fixed, the UE could compare the broadcasted tracking area identifier with each tracking area identifier in the stored tracking area identifier pools in some order. Wherein, the broadcast is over air interface generally. The packet switched wireless system can be a 2G/3G network, but also can be a SAE/LTE network.
S806, when a tracking area identifier which is identical with the broadcasted tracking area identifier exists in the tracking area identifier pools, it is judged that the UE enters into an equivalent tracking area, and does not need to perform tracking area update.
S808, when the broadcasted tracking area identifier is not identical with any one of the tracking area identifiers in the tracking area identifier pool(s), the process of the tracking area update of UE is triggered.

According to the method of the present invention, the modification to the data structure in UE is the smallest, and the requirement to the processing ability of the user equipment is also the lowest. Since the present invention proposes that perform configuring, managing and/or updating one or more tracking area identifier pool(s) by a packet switched control plane function entity and only send the tracking area identifier pool(s) to the UE without configuring it to the other devices in the system, therefore the modification to the original devices in the system limits to the lowest degree.

## Claims

1. A method for triggering tracking area update in packet switched wireless system that includes equivalent tracking areas, comprising:
configuring, managing and/or updating (S302) one or more tracking area identifier pool(s) in control plane function entity, wherein, each tracking area identifier pool corresponds to a group of equivalent tracking areas, the tracking area identifier pool includes all the tracking area identifiers of the corresponding equivalent tracking areas;
when a UE registers in a network successfully, the control plane function entity sends (S304) the tracking area identifier pool(s) to the UE;
during the moving of the UE, the UE judges (S306) whether the current tracking area identifier which is broadcasted by the packet switched wireless system is not identical with any one of all the tracking area identifiers in the tracking area identifier pool(s); if so, triggering the process of tracking area update.

2. The method for triggering tracking area update according to claim 1, wherein the control plane function entity sends the tracking area identifier pool(s) to the user equipment through the registration confirmation message sent to the user equipment.

3. The method for triggering tracking area update according to claim 2, wherein when the user equipment is in long term evaluation access system, the step of the control plane function entity sending the tracking area identifier pool(s) to the user equipment further includes:
the control plane function entity initiates (S602) a registration request;
the control plane function entity sends (S604) the registration request to the Home Subscriber Server which the control plane function entity belongs to;
the Home Subscriber Server sends (S606) a registration confirmation message to the control plane function entity;
the control plane function entity places (S608) the tracking area identifier pool(s) in the registration confirmation message and sends it to the user equipment.

4. The method for triggering tracking area update according to claim 2, wherein when the user equipment is in the long term evolution access system, the step of sending, by the control plane function entity, the tracking area identifier pool(s) to the user equipment further includes:
a system architecture evolution control plane triggers (S502) a registration request;
the system architecture evolution control plane sends (S504) the registration request to the control plane function entity;
the control plane function entity sends (S506) the registration request to the Home Subscriber Server which the control plane function entity belongs to;
the Home Subscriber Server sends (S508) a registration confirmation message to the control plane function entity;
the control plane function entity places (S510) the tracking area identifier pool(s) in the registration confirmation message and sends it to the system architecture evolution control plane;
the system architecture evolution control plane forwards (S512) the registration confirmation message including the tracking area identifier pool(s) to the user equipment.

5. The method for triggering tracking area update according to claim 2, wherein when the user equipment is in 2G/3G access system, the control plane function entity sending the tracking area identifier pool(s) to the user equipment further includes:
2G/3G serving (S702) General Packet Radio Service support node initiates a registration request;
2G/3G serving (S704) General Packet Radio Service support node sends the registration request to the control plane function entity;
the control plane function entity forwards (S706) the registration request to the Home Subscriber Server which the control plane function entity belongs to;
the Home Subscriber Server sends (S708) a registration confirmation message to the control plane function entity;
the control plane function entity places (S710) the tracking area identifier pool(s) in the registration confirmation message and sends it to the 2G/3G service general radio service support node;
the 2G/3G service general radio service support node forwards (S712) the registration confirmation message including the tracking area identifier pool(s) to the user equipment.

6. The method for triggering tracking area update according to claim 2, the method further includes the following step: the control plane function entity stores the tracking area identifiers in groups.

7. The method for triggering tracking area update according to claim 1, wherein the user equipment can identify the tracking area identifier pool(s) and stores the tracking area identifier pool(s) therein.

## Patentansprüche

1. Verfahren zum Auslösen einer Nachführgebiet-Aktualisierung in einem paketvermittelten drahtlosen System, das äquivalente Nachführgebiete aufweist, umfassend:
Konfigurieren, Verwalten und/oder Aktualisieren (S302) eines oder mehrerer Nachführgebiet-Identifizierungspools in der Steuerebenenfunktionsentität, wobei jeder Nachführgebiet-Identifizierungspool einer Gruppe von äquivalenten Nachführgebieten entspricht, der Nachführgebiet-Identifizierungspool alle Nachführgebiet-Identifikatoren der entsprechenden äquivalenten Nachführgebiete einschließt;
wenn sich die UE erfolgreich in einem Netzwerk registriert, Senden (S304), durch die Steuerebenenfunktionsentität, des Nachführgebiet-Identifizierungspools zur UE;
während des Bewegens der UE, Beurteilen (S306) durch die UE, ob der aktuelle Nachführgebiet-Identifikator, der durch das paketvermittelte drahtlose System übertragen wird, nicht mit irgendeinem der Nachführgebiet-Identifikatoren in dem bzw. den Nachführgebiet-Identifizierungspools identisch ist; wenn ja, Auslösen des Prozesses der Nachführgebiet-Aktualisierung.

2. Verfahren zum Auslösen einer Nachführgebiet-Aktualisierung nach Anspruch 1, wobei
die Steuerebenenfunktionsentität den bzw. die Nachführgebiet-Identifizierungspools an das Benutzergerät durch die Registrierungsbestätigungsnachricht sendet, die an das Benutzergerät gesendet wurde.

3. Verfahren zum Auslösen der Nachführgebiet-Aktualisierung nach Anspruch 2, wobei,
wenn sich das Benutzergerät in einem Langzeitauswertungszugangssystem befindet, der Schritt der Steuerebenenfunktionsentität, die den oder die Nachführgebiet-Identifizierungspools an das Benutzergerät sendet, ferner einschließt:
Initiieren (S602) einer Registrierungsanforderung durch die Steuerebenenfunktionsentität;
Senden (S604) der Registrierungsanforderung durch die Steuerebenenfunktionsentität an den Heimatteilnehmerserver, zu dem die Steuerebenenfunktionsentität gehört;
Senden (S606), durch den Heimatteilnehmerserver, einer Registrierungsbestätigungsnachricht an die Steuerebenenfunktionsentität;
Anordnen (S608), durch die Steuerebenenfunktionsentität, des bzw. der Nachführgebiet-Identifizierungspools in der Registrierungsbestätigungsnachricht und Senden davon an das Benutzergerät.

4. Verfahren zum Auslösen der Nachführgebiet-Aktualisierung nach Anspruch 2, wobei,
wenn sich das Benutzergerät in dem Langzeitauswertungszugangssystem befindet, der Schritt des Sendens, durch die Steuerebenenfunktionsentität, des oder der Nachführgebiet-Identifizierungspools an das Benutzergerät, ferner einschließt:
Auslösen (S502), durch eine Systemarchitektur-Evolutionssteuerebene, einer Registrierungsanforderung;
Senden (S504), durch die Systemarchitektur-Evolutionssteuerebene, der Registrierungsanforderung an die Steuerebenenfunktionsentität;
Senden (S506) der Registrierungsanforderung durch die Steuerebenenfunktionsentität an den Heimatteilnehmerserver, zu dem die Steuerebenenfunktionsentität gehört;
Senden (S508), durch den Heimatteilnehmerserver, einer Registrierungsbestätigungsnachricht an die Steuerebenenfunktionsentität;
Anordnen (S510), durch die Steuerebenenfunktionsentität, des bzw. der Nachführgebiet-Identifizierungspools in der Registrierungsbestätigungsnachricht und Senden davon an die Systemarchitektur-Evolutionssteuerebene;
Weiterleiten (S512), durch die Systemarchitektur-Evolutionssteuerebene der Registrierungsbestätigungsnachricht, die den/die Nachführgebiet-Identifizierungspools einschließt, an das Benutzergerät.

5. Verfahren zum Auslösen einer Nachführgebiet-Aktualisierung nach Anspruch 2, wobei,
wenn sich das Benutzergerät in einem 2G-/3G-Zugangssystem befindet, die Steuerebenenfunktionsentität, die den oder die Nachführgebiet-Identifizierungspools an das Benutzergerät sendet, ferner einschließt:
Initiieren, durch den 2G-/3G-Dienst(S702)-General Packet Radio Service-Unterstützungsknoten, einer Registrierungsanforderung;
Senden, durch den 2G-/3G-Dienst (S704)-General Packet Radio Service-Unterstützungsknoten, der Registrierungsanforderung an die Steuerebenenfunktionsentität;
Weiterleiten (S706) der Registrierungsanforderung durch die Steuerebenenfunktionsentität an den Heimatteilnehmerserver, zu dem die Steuerebenenfunktionsentität gehört;
Senden (S708), durch den Heimatteilnehmerserver, einer Registrierungsbestätigungsnachricht an die Steuerebenenfunktionsentität;
Anordnen (S710), durch die Steuerebenenfunktionsentität, des bzw. der Nachführgebiet-Identifizierungspools in der Registrierungsbestätigungsnachricht und Senden davon an den 2G-/3G-Dienst-General Radio Service-Unterstützungsknoten;
Weiterleiten (S712), durch den 2G-/3G-Dienst-General Radio Service-Unterstützungsknoten der Registrierungsbestätigungsnachricht, die den/die Nachführgebiet-Identifizierungspools einschließt, an das Benutzergerät.

6. Verfahren zum Auslösen einer Nachführgebiet-Aktualisierung nach Anspruch 2, wobei das Verfahren ferner den folgenden Schritt umfasst: Speichern, durch die Steuerebenenfunktionsentität, der Nachführgebiet-Identifikatoren in Gruppen.

7. Verfahren zum Auslösen einer Nachführgebiet-Aktualisierung nach Anspruch 1, wobei das Benutzergerät den bzw. die Nachführgebiet-Identifizierungspools identifizieren kann und den bzw. die Nachführgebiet-Identifizierungspools darin speichern kann.

## Revendications

1. Procédé de déclenchement de mise à jour de zone de suivi dans un système sans fil à commutation de paquets qui comporte des zones de suivi équivalentes, comprenant :
la configuration, la gestion et/ou la mise à jour (S302) d'un ou de plusieurs groupements d'identifiants de zone de suivi dans une entité de fonction de plan de commande, dans lequel, chaque groupement d'identifiants de zone de suivi correspond à un groupe de zones de suivi équivalentes, le groupement d'identifiants de zone de suivi comporte tous les identifiants de zone de suivi des zones de suivi équivalentes correspondantes ;
lorsqu'un UE s'enregistre dans un réseau avec succès, l'entité de fonction de plan de commande envoie (S304) le ou les groupements d'identifiants de zone de suivi à l'UE ;
pendant le déplacement de l'UE, l'UE estime (S306) si l'identifiant de zone de suivi actuel qui est radiodiffusé par le système sans fil à commutation de paquets n'est pas identique à l'un quelconque de tous les identifiants de zone de suivi dans le ou les groupements d'identifiants de zone de suivi ; si c'est le cas, le déclenchement du processus de mise à jour de zone de suivi.

2. Procédé de déclenchement de mise à jour de zone de suivi selon la revendication 1, dans lequel
l'entité de fonction de plan de commande envoie le ou les groupements d'identifiants de zone de suivi à l'équipement utilisateur par l'intermédiaire du message de confirmation d'enregistrement envoyé à l'équipement utilisateur.

3. Procédé de déclenchement de mise à jour de zone de suivi selon la revendication 2, dans lequel
lorsque l'équipement utilisateur est dans un système d'accès d'évolution à long terme, l'étape d'envoi par l'entité de fonction de plan de commande du ou des groupements d'identifiants de zone de suivi à l'équipement utilisateur comporte en outre :
l'entité de fonction de plan de commande lance (S602) une demande d'enregistrement ;
l'entité de fonction de plan de commande envoie (S604) la demande d'enregistrement au serveur d'abonné résidentiel auquel appartient l'entité de fonction de plan de commande ;
le serveur d'abonné résidentiel envoie (S606) un message de confirmation d'enregistrement à l'entité de fonction de plan de commande ;
l'entité de fonction de plan de commande place (S608) le ou les groupements d'identifiants de zone de suivi dans le message de confirmation d'enregistrement et l'envoie à l'équipement utilisateur.

4. Procédé de déclenchement de mise à jour de zone de suivi selon la revendication 2, dans lequel
lorsque l'équipement utilisateur est dans le système d'accès d'évolution à long terme, l'étape d'envoi, par l'entité de fonction de plan de commande, du ou des groupements d'identifiants de zone de suivi à l'équipement utilisateur comporte en outre :
un plan de commande d'évolution d'architecture de système déclenche (S502) une demande d'enregistrement ;
le plan de commande d'évolution d'architecture de système envoie (S504) la demande d'enregistrement à l'entité de fonction de plan de commande ;
l'entité de fonction de plan de commande envoie (S506) la demande d'enregistrement au serveur d'abonné résidentiel auquel appartient l'entité de fonction de plan de commande ;
le serveur d'abonné résidentiel envoie (S508) un message de confirmation d'enregistrement à l'entité de fonction de plan de commande ;
l'entité de fonction de plan de commande place (S510) le ou les groupements d'identifiants de zone de suivi dans le message de confirmation d'enregistrement et l'envoie au plan de commande d'évolution d'architecture de système ;
le plan de commande d'évolution d'architecture de système réachemine (S512) le message de confirmation d'enregistrement incluant le ou les groupements d'identifiants de zone de suivi à l'équipement utilisateur.

5. Procédé de déclenchement de mise à jour de zone de suivi selon la revendication 2, dans lequel
lorsque l'équipement utilisateur est dans un système d'accès 2G/3G, l'envoi par l'entité de fonction de plan de commande du ou des groupements d'identifiants de zone de suivi à l'équipement utilisateur comporte en outre :
un noeud de support de service général de radiocommunication par paquets de desserte 2G/3G (S702) lance une demande d'enregistrement ;
un noeud de support de service général de radiocommunication par paquets de desserte 2G/3G (S704) envoie la demande d'enregistrement à l'entité de fonction de plan de commande ;
l'entité de fonction de plan de commande achemine (S706) la demande d'enregistrement au serveur d'abonné résidentiel auquel appartient l'entité de fonction de plan de commande ;
le serveur d'abonné résidentiel envoie (S708) un message de confirmation d'enregistrement à l'entité de fonction de plan de commande ;
l'entité de fonction de plan de commande place (S710) le ou les groupements d'identifiants de zone de suivi dans le message de confirmation d'enregistrement et l'envoie au noeud de support de service général de radiocommunication par paquets 2G/3G ;
le noeud de support de service général de radiocommunication par paquets 2G/3G achemine (S712) le message de confirmation d'enregistrement incluant le ou les groupements d'identifiants de zone de suivi à l'équipement utilisateur.

6. Procédé de déclenchement de mise à jour de zone de suivi selon la revendication 2, le procédé comporte en outre l'étape suivante : l'entité de fonction de plan de commande stocke les identifiants de zone de suivi dans des groupes.

7. Procédé de déclenchement de mise à jour de zone de suivi selon la revendication 1, dans lequel l'équipement utilisateur peut identifier le ou les groupements d'identifiants de zone de suivi et stocke le ou les groupements d'identifiants de zone de suivi à l'intérieur.
